# FASCICULE DE BREVET EUROPEEN

(11) **EP 4 222 001 B1**
(45) Date de publication et mention de la délivrance du brevet: **29.10.2025**
(21) Numéro de dépôt: 21798083.8
(22) Date de dépôt: 28.09.2021
(51) Int. Cl.: B60C 13/02, B60C 13/04, B60C 13/00, B60C 15/024

(54) **PNEUMATIQUE COMPRENANT UN INSERT DE FLANC**
REIFEN MIT SEITENWANDEINSATZ
TYRE COMPRISING A SIDEWALL INSERT

(30) Priorité: 01.10.2020 FR 2010023
(43) Date de publication de la demande: 09.08.2023
(73) Titulaire: COMPAGNIE GENERALE DES ETABLISSEMENTS MICHELIN, 63000 Clermont-Ferrand (FR)
(72) Inventeur: GUIMARD, Bruno, 63040 CLERMONT-FERRAND Cedex 9 (FR); CHAPUT, Vincent-Jacques, 63040 CLERMONT-FERRAND Cedex 9 (FR); MUHLHOFF, Olivier, 63040 CLERMONT-FERRAND CEDEX 9 (FR)
(74) Mandataire: M.F.P. Michelin
(86) Numéro de dépôt international: PCT/FR2021/051675
(87) Numéro de publication internationale: WO 2022/069831

(56) Documents cités:
- US-A- 3 128 815
- US-A- 3 638 704
- US-A1- 2009 229 727
- US-A1- 2015 075 693

## Description

La présente invention a pour objet un pneumatique, destiné plus particulièrement à équiper un véhicule léger à quatre roues (automobile, camionnette), ou à deux roues (moto), et comprenant au moins un flanc avec un insert de flanc, destiné à personnaliser le design du flanc de pneumatique.

Une préoccupation constante des constructeurs et des utilisateurs de véhicules est de personnaliser le design des flancs de pneumatiques par des moyens colorés et/ou des éléments additionnels, appelés inserts dans le présent document.

Un moyen coloré connu est une composition de caoutchouc colorée, par exemple de couleur blanche, contenue dans le flanc du pneumatique et contrastant avec la couleur noire des compositions de caoutchouc adjacentes. Toutefois cette solution technique présente un certain nombre d'inconvénients. Tout d'abord, certains composants chimiques, tels que des composants de protection, contenus dans les compositions de caoutchouc adjacentes au moyen coloré, peuvent migrer vers la composition de caoutchouc colorée et entrainer sa décoloration progressive au fil du temps. De plus, les déformations du flanc au cours de la vie du pneumatique peuvent initier des fissurations dans la composition de caoutchouc colorée et dégrader son aspect. Par ailleurs les moyens mécaniques utilisés pour le montage du pneumatique sur sa jante, en frottant sur la composition de caoutchouc colorée, peuvent également la dégrader. Enfin, la fabrication d'un pneumatique comprenant des portions de couleurs différenciées est plus complexe industriellement.

Parmi les inserts connus, le document EP 2692542B1 décrit un anneau décoratif destiné à être monté entre le bourrelet du pneumatique et la jante. Toutefois le montage de cet anneau est délicat en raison de son positionnement. De plus la présence d'un anneau entre un bourrelet du pneumatique et la jante peut modifier le comportement mécanique du pneumatique, et donc celui du véhicule. Enfin cet anneau risque, pour sa mise en place correcte, de nécessiter une adaptation de la géométrie de la jante qui ne serait alors plus conforme au standard de profil de jante pour lequel le pneumatique a été conçu.

Le document US 3128815 décrit un autre insert sous la forme d'un élément de garniture de pneumatique destiné à être engagé dans un flanc de façon amovible. Cet élément de garniture peut être fixé au flanc par différents moyens, tels qu'un engagement de ses extrémités dans le flanc, un accrochage au niveau de ses extrémités par des moyens d'ancrage en relief ou en creux par rapport au flanc. En outre l'élément de garniture décrit recouvre une portion significative du flanc, typiquement au moins le tiers de la surface du flanc, et est positionné plus particulièrement dans la partie radialement intérieure du flanc, entre le point le plus axialement extérieur du flanc et le rebord de jante. Toutefois cet élément de garniture est susceptible de se déformer et de se décrocher du flanc, au cours du roulage du pneumatique, car il est positionné dans une zone de forte flexion du pneumatique.

Le document JPH11151918 décrit également un insert de couleur amovible destiné à être fixé sur un flanc de pneumatique, dans la partie radialement extérieure du flanc, à proximité de la bande de roulement, grâce à un moyen d'accrochage en creux par rapport à la surface du flanc. Toutefois, un tel moyen d'accrochage ne permet pas un montage facile de cet insert sur le pneumatique monté sur sa jante et gonflé, car il peut y avoir une inadéquation de la géométrie de l'insert avec la géométrie du creux du moyen d'accrochage, en fonction de la pression de gonflage, ou en fonction de la largeur de la jante. De plus en roulage, le serrage de l'insert sur le flanc peut être modifié, par exemple sous de fortes accélérations transversales, avec un risque d'éjection de l'insert.

US2009/0229727, qui peut être considéré comme l'état de la technique le plus proche de l'invention, divulgue un pneumatique de forme toroïdale, comportant une bande de roulement, des flancs opposés, et des bourrelets pour le montage sur une jante. Au moins l'un des flancs est pourvue d'une saillie locale en caoutchouc délimitant en totalité une ou deux rainures prévues pour recevoir et retenir une ou des saillies respectives d'un élément amovible formant un protecteur de rebord de jante, décoratif ou coloré. La forme transversale de la rainure est de préférence une forme en queue d'aronde.

Les inventeurs se sont donnés pour objectif de proposer un pneumatique apte à être équipé d'au moins un insert de flanc, avec un montage et un accrochage sur le flanc améliorés.

Cet objectif a été atteint par un pneumatique pour un véhicule léger, destiné à être monté sur une jante et apte à être équipé d'au moins un insert de flanc, ledit pneumatique ayant une section nominale de hauteur H et comprenant :
- deux flancs reliant un sommet respectivement à deux bourrelets, destinés chacun à entrer en contact avec la jante,
- au moins un flanc comprenant un moyen d'ancrage, destiné à coopérer avec au moins un insert de flanc,
- le moyen d'ancrage s'étendant au moins en partie circonférentiellement, selon une direction circonférentielle du pneumatique, et comprenant un creux formé dans une couche axialement extérieure de flanc comprenant au moins un matériau caoutchoutique, s'étendant à partir d'une face axialement extérieure du flanc axialement vers l'intérieur du flanc,
- le creux étant délimité axialement vers l'intérieur par un fond de creux et radialement par deux parois de creux,
- le creux ayant, dans tout plan méridien contenant l'axe de rotation du pneumatique, une profondeur Pc, distance maximale mesurée perpendiculairement entre la face axialement extérieure du flanc et le fond de creux, au moins égale à 2 mm, et une largeur Lc, mesurée, au niveau de la face axialement extérieure du flanc, entre les deux parois de creux, au plus égale à 15% de la hauteur de section nominale H du pneumatique,
- le moyen d'ancrage comprenant une protubérance, en relief par rapport au fond de creux et s'étendant à partir du fond de creux jusqu'au voisinage de la face axialement extérieure du flanc,
- et la protubérance ayant, dans tout plan méridien, une largeur minimale Lpmin au voisinage du fond de creux de façon à garantir l'ancrage de l'insert de flanc destiné à coopérer avec le moyen d'ancrage.

Le principe de l'invention est d'avoir un moyen d'ancrage, pour un insert de flanc, comprenant un creux circonférentiel, formé dans une couche axialement extérieure de flanc, et une protubérance, formée dans ledit creux.

Le creux peut être continu circonférentiellement ou discontinu circonférentiellement, c'est-à-dire formé de portions circonférentielles disjointes entre elles.

La couche axialement extérieure de flanc dans lequel est formé le creux s'étend axialement à partir d'une face axialement extérieure de flanc, en contact avec l'air atmosphérique, jusqu'à une couche de renforcement la plus axialement extérieure, formée de renforts le plus souvent textiles. Plus précisément, la couche axialement extérieure de flanc est en contact axialement intérieur avec le mélange caoutchoutique enrobant les renforts de la couche de renforcement la plus axialement extérieure, appelé usuellement mélange d'enrobage.

Le creux permet d'ancrer le flanc, par un blocage des bords de l'insert de flanc entre ses parois. Il contribue donc au maintien de l'insert de flanc en roulage, susceptible d'être éjecté.

Le creux permet également d'engager l'insert de flanc dans l'épaisseur du flanc, de façon à ne pas créer de protubérance significative par rapport à la face axialement extérieure de flanc, et donc de ne pas perturber l'écoulement de l'air au voisinage du flanc dans cette zone. Par conséquent la trainée aérodynamique du pneumatique n'est pas augmentée. Corrélativement, la résistance au roulement du pneumatique, et donc la consommation de carburant, ne sont pas non plus augmentées.

Selon l'invention, la profondeur Pc du creux est au moins égale à 2 mm.

Si la profondeur Pc est inférieure à 2 mm, le moyen d'ancrage ne garantit pas un accrochage suffisant de l'insert de flanc, permettant de résister aux différentes sollicitations mécaniques appliquées au pneumatique au cours de son utilisation, pendant toute sa vie.

Également selon l'invention, la largeur Lc du creux est au plus égale à 15% de la hauteur de section nominale H du pneumatique.

La largeur Lc du creux doit rester limitée, car plus elle augmente, plus la flexion de la zone de l'insert de flanc, en usage, augmente, ce qui génère des déformations importantes et d'éventuels problèmes de fatigue de l'insert de flanc. Les déformations au niveau du creux augmentent en effet avec la largeur Lc du creux, celle-ci pouvant être exprimée en pourcentage de la hauteur de section nominale H du pneumatique ou en valeur absolue. La section nominale de hauteur H est définie par les normes usuelles relatives aux pneumatiques, telles que par exemple, la norme de la « European Tyre and Rim Technical Organisation » (Organisation technique européenne du pneumatique et de la jante) ou norme « ETRTO ».

La protubérance, formée dans le creux à partir du fond de creux, est destinée à entrer en contact avec une face axialement intérieure de l'insert de flanc, et permet l'ancrage de l'insert de flanc grâce à sa portion axialement intérieure qui a une largeur minimale Lpmin au voisinage du fond de creux. Cette configuration de protubérance permet un clipsage efficace de l'insert de flanc sur la protubérance et garantit son maintien en position au cours du roulage, sous les sollicitations mécaniques de flexion et de centrifugation appliquées au pneumatique.

Avantageusement, la profondeur Pc du creux est au moins égale à 3 mm.

Encore avantageusement, la profondeur Pc du creux est au plus égale à 7 mm, de préférence au plus égale à 5 mm.

Si la profondeur Pc est supérieure à 7 mm, l'épaisseur de la couche de matériau caoutchoutique, axialement intérieure au fond de creux, est insuffisante pour garantir un découplage mécanique entre l'insert de flanc, destiné à être engagé dans ledit creux, et la couche de renforcement la plus axialement extérieure. Il en résulte des concentrations de contrainte en fond de creux susceptibles de générer des fissurations et une diminution de l'endurance du flanc. Par ailleurs, concernant la fabrication, un creux de profondeur limitée garantit la présence d'une épaisseur de couche de matériau caoutchoutique, axialement intérieure au fond de creux, malgré l'existence de mouvements importants des matériaux présents dans cette zone, au cours des étapes de confection, puis de finition du pneumatique. En d'autres termes, une profondeur de creux pas trop élevée permet de garantir les tolérances de fabrication.

La couche axialement extérieure de flanc ayant une épaisseur W au niveau du moyen d'ancrage, la différence entre l'épaisseur W de la couche axialement extérieure de flanc et la profondeur Pc du creux est au moins égale à 1 mm, de préférence au moins égale à 2 mm.

L'épaisseur W est mesurée entre la face axialement extérieure de flanc et les fibres axialement extérieures des renforts de la couche de renforcement la plus axialement extérieure : elle prend donc en compte la couche axialement extérieure de flanc à proprement parler et la couche d'enrobage axialement extérieure de la couche de renforcement la plus axialement extérieure. La différence entre l'épaisseur W de la couche axialement extérieure de flanc et la profondeur Pc du creux définit donc l'épaisseur de la couche de matériau caoutchoutique, comprise entre le fond de creux et la couche de renforcement la plus axialement extérieure.

Une épaisseur de 1 mm est l'épaisseur minimale de couche de matériau caoutchoutique, garantissant un découplage mécanique entre l'insert de flanc, destiné à être engagé dans ledit creux, et l'armature de renforts axialement intérieure et en interface avec la couche de flanc axialement extérieure. Cette épaisseur minimale évite par conséquent des concentrations de contrainte en fond de creux, susceptibles de générer des fissurations et une diminution de l'endurance du flanc.

Avantageusement la largeur Lc du creux est au plus égale à 10% de la hauteur de section nominale H du pneumatique.

Également avantageusement la largeur Lc du creux est au plus égale à 20 mm, de préférence au plus égale à 12 mm.

Préférentiellement le creux est formé dans une couche axialement extérieure de flanc constituée d'un matériau caoutchoutique unique.

Par conséquent le creux n'est pas formé dans une couche composite, constituée d'une superposition de matériaux, et, donc, potentiellement sensible à des problèmes de tenue mécanique des interfaces entre lesdits matériaux.

Avantageusement la droite, contenue dans tout plan méridien et passant par deux points d'intersection respectivement de chaque paroi de creux avec la face axialement extérieure de flanc, forme, avec la direction radiale, un angle au plus égal à 25°, de préférence au plus égal à 15°.

Lorsque l'angle A est supérieur à 25°, la face axialement extérieure de flanc devient trop inclinée par rapport à la direction radiale, dans la zone du moyen d'ancrage, généralement à proximité du bourrelet de pneumatique. Par conséquent, les parois latérales du creux ne permettent pas de retenir l'insert de flanc qui va se déformer sous l'action des forces centrifuges.

Préférentiellement la protubérance a, dans tout plan méridien, une hauteur Hp au moins égale à la profondeur Pc du creux moins 2 mm.

Une valeur minimale de hauteur Hp, égale à la profondeur Pc du creux moins 2 mm, permet de positionner un insert de flanc sur la protubérance, avec une hauteur d'ancrage suffisante tout en ne dépassant pas ou peu la face axialement extérieure de flanc. Cette configuration permet donc un ancrage efficace de l'insert de flanc tout en le protégeant des râpages potentiels du flanc contre les trottoirs. En outre, un engagement limité de l'insert de flanc dans l'épaisseur du flanc garantit sa visibilité en tant que moyen de design.

Encore préférentiellement la protubérance a, dans tout plan méridien, une hauteur Hp au plus égale à la profondeur Pc du creux plus 2 mm.

Une valeur maximale de hauteur Hp, égale à la profondeur Pc du creux plus 2 mm, permet d'éviter que l'insert soit en relief par rapport à la face axialement extérieure de flanc. Cette configuration permet ainsi ne pas perturber l'écoulement de l'air au voisinage du flanc dans cette zone. Par conséquent la trainée aérodynamique du pneumatique n'est pas augmentée. Corrélativement, la résistance au roulement du pneumatique, et donc la consommation de carburant, ne sont pas augmentées. En outre, la sensibilité à des râpages potentiels du flanc contre les trottoirs reste limitée.

Selon un mode de réalisation préféré de la protubérance, la protubérance est constituée, dans tout plan méridien, par un étagement d'une première portion étroite s'étendant axialement vers l'extérieur à partir du fond de creux et ayant une largeur minimale égale à la largeur minimale de protubérance Lpmin, et d'une deuxième portion large s'étendant axialement vers l'extérieur à partir de la première portion étroite et ayant une largeur maximale égale à la largeur de protubérance maximale Lpmax. Une telle protubérance a ainsi sensiblement une forme de champignon, dont le pied est la première portion étroite et la tête est la deuxième portion large.

Le flanc comprenant, sur sa face axialement extérieure de flanc et au voisinage radialement extérieur d'un bourrelet, un cordon de protection ayant une arête, et le moyen d'ancrage ayant une ligne moyenne circonférentielle, la ligne moyenne circonférentielle du moyen d'ancrage est avantageusement positionnée, dans tout plan méridien, à une distance radiale d1 au moins égale à 4 mm, radialement à l'extérieur de l'arête du cordon de protection.

Un cordon de protection est positionné sur la face axialement extérieure de flanc et au voisinage radialement extérieur d'un bourrelet. Un positionnement au voisinage radialement extérieur du bourrelet signifie que le point le plus radialement intérieur du cordon de protection est positionné à une distance radiale d'au moins 4 mm radialement à l'extérieur d'un rebord de jante sur laquelle le pneumatique est destiné à être monté. Par ailleurs l'arête du cordon de protection est le sommet de la section sensiblement triangulaire du cordon de protection, non situé sur la face axialement extérieure de flanc.

Comme le cordon de protection a pour fonction de protéger le rebord de la jante sur laquelle le pneumatique est destiné à être monté, c'est la portion de pneumatique la plus susceptible de frotter des éléments extérieurs, tels que des trottoirs et des pierres, et également la plus susceptible d'entrer en contact avec un sol lors du démontage du pneumatique. Par conséquent, l'insert de flanc, et donc le moyen d'ancrage correspondant, doivent être suffisamment éloignés du cordon de protection pour ne pas être endommagés. Par ailleurs, un moyen d'ancrage à proximité du cordon de protection donne à celui-ci davantage de visibilité.

Encore avantageusement la ligne moyenne circonférentielle du moyen d'ancrage est positionnée, dans tout plan méridien, à une distance radiale d2 au moins égale à 10% de hauteur de la section nominale H du pneumatique, radialement à l'intérieur d'une droite axiale passant à mi-hauteur H/2 de la section nominale du pneumatique.

Si, pour certains pneumatiques ayant une petite hauteur de section nominale H, donc une petite hauteur de flanc, le cordon de protection est la portion de pneumatique la plus axialement extérieure, pour d'autres pneumatiques, le point le plus axialement extérieur du pneumatique est positionné sur une droite axiale passant à mi-hauteur H/2 de la section nominale du pneumatique. Pour ces pneumatiques, pour éviter une détérioration de l'insert de flanc, en particulier lors d'un râpage du flanc contre un trottoir, la ligne circonférentielle moyenne du moyen d'ancrage correspondant est avantageusement radialement positionnée à une distance radiale d2 au moins égale à 10% de hauteur de la section nominale H du pneumatique, radialement à l'intérieur de la droite axiale passant à mi-hauteur H/2 de la section nominale du pneumatique. Typiquement, la distance radiale d2 est au moins égale à 2 mm et préférentiellement au moins égale à 8mm.

L'invention a également pour objet un insert de flanc destiné à être monté sur un flanc de pneumatique.

L'insert de flanc est destiné à coopérer avec un moyen d'ancrage selon l'un des modes de réalisation de pneumatique précédemment décrits, par engagement dans le creux (7) du moyen d'ancrage (6) et par clipsage sur la protubérance (8) du moyen d'ancrage (6).

L'insert de flanc a une ligne moyenne circonférentielle ayant un diamètre moyen D2, avant montage sur le pneumatique, au plus égal à un diamètre moyen D1 d'une ligne moyenne circonférentielle du moyen d'ancrage. Dans ces conditions, l'ancrage de l'insert de flanc dans le moyen d'ancrage est réalisé sous précontrainte, ce qui contribue à un maintien efficace de l'insert de flanc dans le flanc, avec un faible risque d'éjection en roulage.

Selon un mode de réalisation particulier, l'insert de flanc peut avoir, au voisinage de face axialement extérieure de flanc, une largeur variable. Ceci implique une largeur variable de creux du moyen d'ancrage, et donc un moyen d'ancrage non axisymétrique, par rapport à l'axe de rotation du pneumatique.

Selon un mode de réalisation préféré, l'insert de flanc comprend au moins un matériau polymérique, tel qu'un matériau caoutchoutique, un silicone ou un matériau thermoplastique, par exemple un polyuréthane.

Le ou les matériaux qui constituent l'insert de flanc doivent être suffisamment déformables pour ne pas générer de contraintes excessives à l'interface entre l'insert de flanc et le moyen d'ancrage, susceptibles d'induire des fissurations et des ruptures de fatigue dans le flanc du pneumatique. Un matériau polymérique, tel que, de façon non exhaustive, un matériau caoutchoutique, un silicone ou un matériau thermoplastique, par exemple un polyuréthane, satisfait cette exigence.

L'insert de flanc étant constitué d'un matériau ayant un module d'élasticité en extension à 10% d'allongement M2 et étant destiné à coopérer avec un moyen d'ancrage constitué d'un matériau caoutchoutique ayant un module d'élasticité en extension à 10% d'allongement M1, M2 est avantageusement au moins égal à 0.4*M1. L'insert de flanc doit être suffisamment rigide pour permettre sa mise en place sur le flanc.

L'insert de flanc étant constitué d'un matériau ayant un module d'élasticité en extension à 10% d'allongement M2 et étant destiné à coopérer avec un moyen d'ancrage constitué d'un matériau caoutchoutique ayant un module d'élasticité en extension à 10% d'allongement M1, M2 est encore avantageusement au plus égal à 5*M1. L'insert de flanc ne doit pas être trop rigide pour ne pas générer de contraintes excessives dans le flanc du pneumatique susceptibles d'endommager le flanc, lorsque celui-ci est soumis à des sollicitations de flexion, et pour diminuer le risque d'éjection par centrifugation de l'insert de flanc en roulage.

L'insert de flanc a préférentiellement une coloration et/ou une texture différentes de celles du flanc comprenant le moyen d'ancrage. L'objectif de l'invention étant de personnaliser le design des flancs de pneumatique, l'insert de flanc a préférentiellement une coloration et/ou une texture différenciantes par rapport au flanc.

L'insert de flanc préférentiellement coloré peut avoir une ou plusieurs couleurs différenciées par rapport à la couleur usuellement noire du flanc. Encore préférentiellement l'insert de flanc est monochrome dans un but de simplification de sa fabrication.

Selon des variantes de réalisation particulières, pour le différencier encore du flanc, l'insert de flanc est recouvert d'un graphisme ou d'une texture, par exemple de type velours.

L'invention a enfin pour objet un ensemble constitué d'un pneumatique selon l'un quelconque des modes de réalisation du pneumatique précédemment décrits, et d'au moins un insert de flanc selon l'un quelconque des modes de réalisation de l'insert de flanc précédemment décrits.

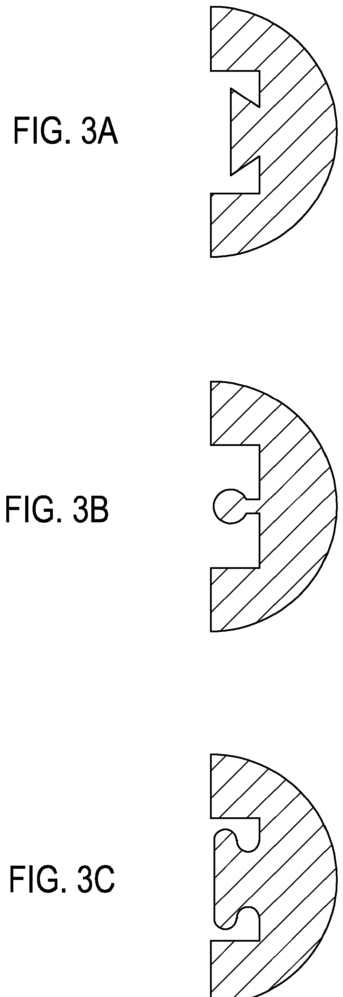

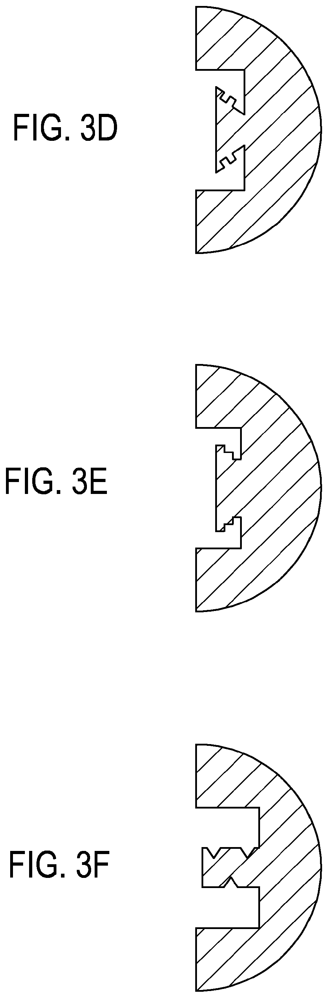

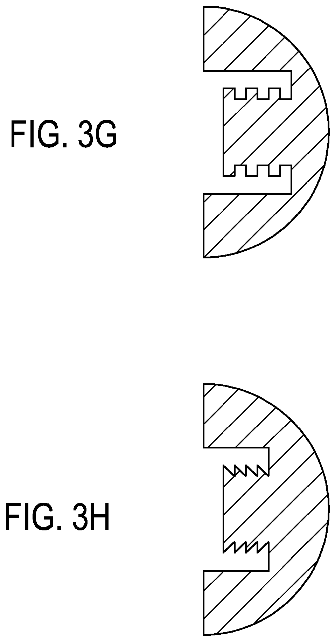

Les caractéristiques de l'invention sont illustrées par les figures 1 à 5 schématiques et non représentées à l'échelle :
- Figure 1 : Demi-coupe méridienne d'un pneumatique selon l'invention monté sur sa jante,
- Figure 2 : Coupe méridienne d'un moyen d'ancrage selon l'invention,
- Figures [3A] à [3H] : Exemples de modes de réalisation du moyen d'ancrage,
- Figure 4 : Demi-coupe méridienne d'un pneumatique selon l'invention monté sur sa jante et équipé d'un insert de flanc,
- Figure 5 : Coupe méridienne d'un moyen d'ancrage selon l'invention en combinaison avec un insert de flanc.

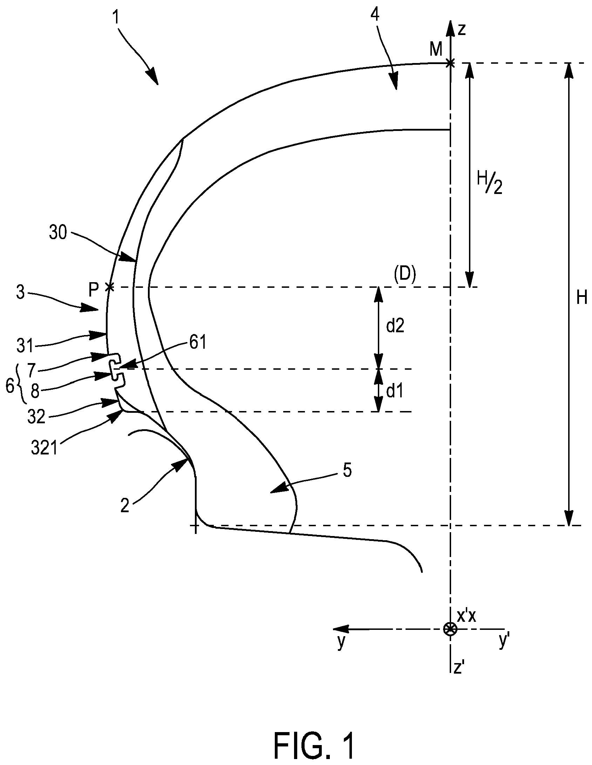

La figure 1 est une demi-coupe méridienne d'un pneumatique 1 selon l'invention monté sur sa jante 2. Le pneumatique 1 pour un véhicule léger est monté sur une jante 2 et apte à être équipé d'au moins un insert de flanc 9 (non représenté). Le pneumatique 1 a une section nominale de hauteur H au sens de la norme ETRTO (European Tyre and Rim Technical Organisation) et comprend deux flancs 3 reliant un sommet 4 respectivement à deux bourrelets 5, destinés chacun à entrer en contact avec la jante 2. Le flanc 3 représenté comprend un moyen d'ancrage 6, destiné à coopérer avec un insert de flanc 9 (non représenté). Le moyen d'ancrage 6 s'étend circonférentiellement, selon une direction circonférentielle XX' du pneumatique, et comprend un creux 7 formé dans une couche axialement extérieure de flanc 30 comprenant au moins un matériau caoutchoutique, s'étendant à partir d'une face axialement extérieure du flanc 31 axialement vers l'intérieur du flanc 3. Selon l'invention, le moyen d'ancrage 6 comprend une protubérance 8, en relief par rapport au fond de creux et s'étendant à partir du fond de creux jusqu'au voisinage de la face axialement extérieure du flanc 31, et la protubérance 8 a, dans le plan méridien YZ, une largeur minimale Lpmin (non référencée) au voisinage du fond de creux de façon à garantir l'ancrage de l'insert de flanc destiné à coopérer avec le moyen d'ancrage 6. Dans le mode de réalisation particulier représenté sur la figure 1, le flanc 3 comprend, sur sa face axialement extérieure de flanc 31 et au voisinage radialement extérieur du bourrelet 5, un cordon de protection 32 ayant une arête 321. L'arête 321 du cordon de protection 32 est le sommet de la section sensiblement triangulaire du cordon de protection, non situé sur la face axialement extérieure de flanc 31. Le moyen d'ancrage 6 ayant une ligne moyenne circonférentielle 61, la ligne moyenne circonférentielle 61 du moyen d'ancrage 6 est positionnée, dans le plan méridien YZ, à une distance radiale d1 au moins égale à 4 mm, radialement à l'extérieur de l'arête 321 du cordon de protection 32. En outre la ligne moyenne circonférentielle 61 du moyen d'ancrage 6 est positionnée, dans le plan méridien YZ, à une distance radiale d2 au moins égale à 10% de hauteur de la section nominale H du pneumatique 1, radialement à l'intérieur d'une droite axiale D passant à mi-hauteur H/2 de la section nominale du pneumatique 1.

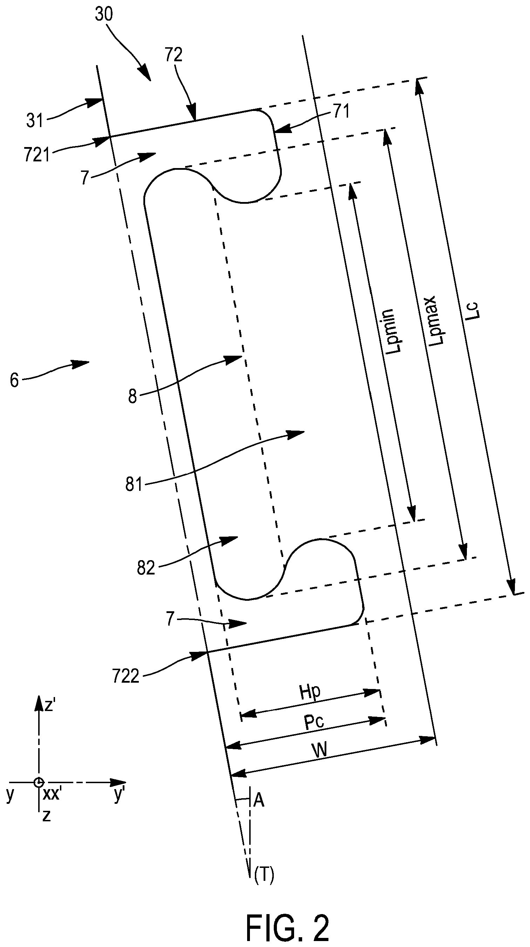

La figure 2 est une coupe méridienne d'un moyen d'ancrage 6 selon l'invention. C'est une vue détaillée de la figure 1. Le moyen d'ancrage 6 comprend un creux 7 et une protubérance 8. Le creux 7 est délimité axialement vers l'intérieur par un fond de creux 71 et radialement par deux parois de creux 72. Le creux 7 a, dans le plan méridien YZ contenant l'axe de rotation YY' du pneumatique, une profondeur Pc, distance maximale mesurée perpendiculairement entre la face axialement extérieure du flanc 31 et le fond de creux 71, et une largeur Lc, mesurée, au niveau de la face axialement extérieure du flanc 31, entre les deux parois de creux 72. La profondeur Pc du creux 7 est au moins égale à 2 mm et au plus égale à 7 mm. La largeur Lc du creux 7 est au plus égale à 15%, de préférence au plus égale à 10% de la hauteur de section nominale H du pneumatique 1. La couche axialement extérieure de flanc 30 ayant une épaisseur W au niveau du moyen d'ancrage 6, la différence entre l'épaisseur W de la couche axialement extérieure de flanc 30 et la profondeur Pc du creux 7 est au moins égale à 1 mm. En outre la droite T, contenue dans le plan méridien YZ et passant par deux points d'intersection (721, 722) respectivement de chaque paroi de creux 72 avec la face axialement extérieure de flanc 31, forme, avec la direction radiale ZZ', un angle A au plus égal à 25°. Enfin, la protubérance 8 est constituée, dans tout plan méridien YZ, par un étagement d'une première portion étroite 81 s'étendant axialement vers l'extérieur à partir du fond de creux 71 et ayant une largeur minimale égale à la largeur minimale de protubérance Lpmin, et d'une deuxième portion large 82 s'étendant axialement vers l'extérieur à partir de la première portion étroite 81 et ayant une largeur maximale égale à la largeur de protubérance maximale Lpmax.

Les Figures [3A] à [3H] sont des exemples de modes de réalisation du moyen d'ancrage. Le moyen d'ancrage de la figure [3A] a une section méridienne de protubérance en queue d'aronde. Le moyen d'ancrage de la figure [3B] a une section méridienne de protubérance sphérique. Le moyen d'ancrage de la figure [3C] a une section méridienne de protubérance en forme de champignon. Le moyen d'ancrage de la figure [3D] a une section méridienne de protubérance en queue d'aronde crénelée. Le moyen d'ancrage de la figure [3E] a une section méridienne de protubérance en queue d'aronde en escalier. Le moyen d'ancrage de la figure [3F] a une section méridienne de protubérance cylindrique incisée. Le moyen d'ancrage de la figure [3G] a une section méridienne de protubérance cylindrique crénelée. Le moyen d'ancrage de la figure [3H] a une section méridienne de protubérance cylindrique avec des dents. Tous ces exemples de protubérances de moyen d'ancrage visent à assurer un verrouillage efficace de l'insert de flanc dans son moyen d'ancrage.

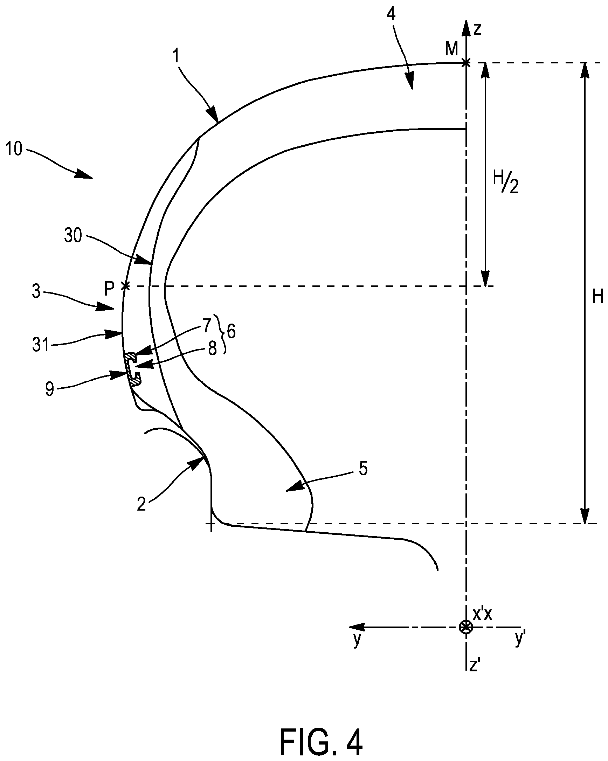

La figure 4 est une demi-coupe méridienne d'un pneumatique selon l'invention monté sur sa jante et équipé d'un insert de flanc. Elle combine le pneumatique de la figure 1 avec un insert de flanc 9.

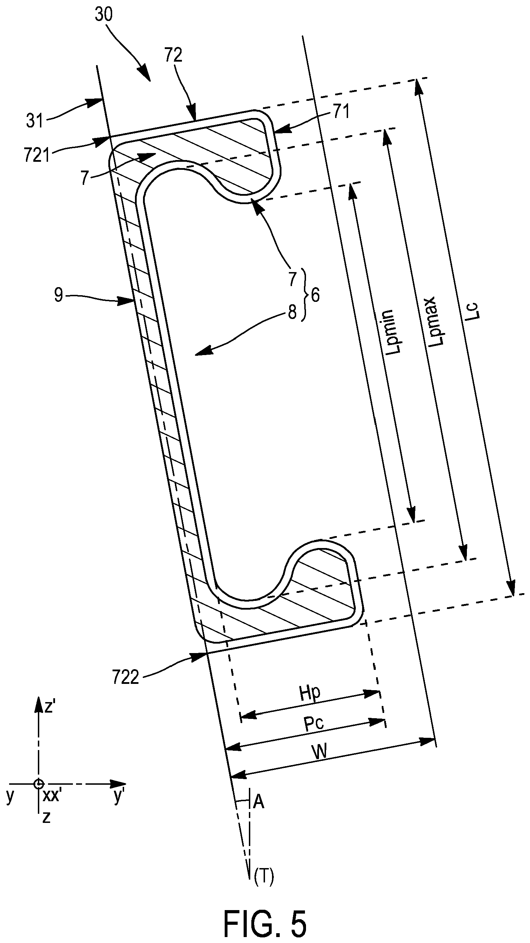

La figure 5 est une coupe méridienne d'un moyen d'ancrage 6 selon l'invention, tel que représenté sur la figure 2, en combinaison avec un insert de flanc 9. C'est une vue détaillée de la figure 4.

Les inventeurs ont plus particulièrement étudié cette invention pour un pneumatique de dimension 245/45 R 18 10 W XL, destiné à être gonflé à une pression recommandée égale à 2.9 bars et à porter une charge recommandée égale à 800 kg.

Les caractéristiques de l'exemple étudié par les inventeurs sont présentées dans le tableau 1, ci-dessous :

**[Tableau 1]**

| **Caractéristiques** | **Valeurs des caractéristiques** | **Commentaires** |
|---|---|---|
| Section nominale H du pneumatique | 110 mm | |
| Distance radiale d1 du moyen d'ancrage au cordon de protection | 8.4 mm | Au moins égale à 4 mm |
| Distance radiale d2 du moyen d'ancrage à la mi-hauteur de section nominale | 20 mm | Au moins égale à 10% de H = 11 mm |
| Profondeur Pc du creux | 3.9 mm | Au moins égale à 2 mm et au plus égale à 7mm. |
| Largeur Lc du creux | 9.1 mm | Au plus égale à 15% de H = 16.5 mm |
| Hauteur Hp de la protubérance | 2.9 mm | Au moins égale à Pc-2 mm = 1.9 mm et au plus égale à Pc+2 mm = 5.9 mm |
| Largeur minimale Lpmin de la protubérance | 4.4 mm | |
| Largeur maximale Lpmax de la protubérance | 5.4 mm | |
| Epaisseur W de la couche axialement extérieure de flanc | 7.5 mm | W-Pc = 3.6 mm donc au moins égale à 2 mm. |

Les inventeurs ont pu constater un montage facilité et un accrochage plus efficace pour un insert de flanc équipant un flanc de pneumatique selon l'invention.

## Revendications

1. Pneumatique (1) pour un véhicule léger, destiné à être monté sur une jante (2) et apte à être équipé d'au moins un insert de flanc (9), ledit pneumatique (1) ayant une section nominale de hauteur H et comprenant :
- deux flancs (3) reliant un sommet (4) respectivement à deux bourrelets (5), destinés chacun à entrer en contact avec la jante (2),
- au moins un flanc (3) comprenant un moyen d'ancrage (6), destiné à coopérer avec au moins un insert de flanc (9),
- le moyen d'ancrage (6) s'étendant circonférentiellement, selon une direction circonférentielle (XX') du pneumatique, et comprenant un creux (7) formé dans une couche axialement extérieure de flanc (30) comprenant au moins un matériau caoutchoutique, s'étendant à partir d'une face axialement extérieure du flanc (31) axialement vers l'intérieur du flanc (3),
- le creux (7) étant délimité axialement vers l'intérieur par un fond de creux (71) et radialement par deux parois de creux (72),
- le creux (7) ayant, dans tout plan méridien (YZ) contenant l'axe de rotation (YY') du pneumatique, une profondeur Pc, distance maximale mesurée perpendiculairement entre la face axialement extérieure du flanc (31) et le fond de creux (71), au moins égale à 2 mm, et une largeur Lc, mesurée, au niveau de la face axialement extérieure du flanc (31), entre les deux parois de creux (72), au plus égale à 15% de la hauteur de section nominale H du pneumatique (1), dans lequel le moyen d'ancrage (6) comprend une protubérance (8), en relief par rapport au fond de creux (71) et s'étendant à partir du fond de creux (71) jusqu'au voisinage de la face axialement extérieure du flanc (31), et dans lequel la protubérance (8) a, dans tout plan méridien (YZ), une largeur minimale Lpmin au voisinage du fond de creux (71) de façon à garantir l'ancrage de l'insert de flanc (9) destiné à coopérer avec le moyen d'ancrage (6).

2. Pneumatique (1) selon la revendication 1, dans lequel la profondeur Pc du creux (7) est au moins égale à 3 mm.

3. Pneumatique (1) selon l'une des revendications 1 ou 2, dans lequel la profondeur Pc du creux (7) est au plus égale à 7 mm, et de préférence au plus égale à 5 mm.

4. Pneumatique (1) selon l'une quelconque des revendications 1 à 3, la couche axialement extérieure de flanc (30) ayant une épaisseur W au niveau du moyen d'ancrage (6), dans lequel la différence entre l'épaisseur W de la couche axialement extérieure de flanc (30) et la profondeur Pc du creux (7) est au moins égale à 1 mm, de préférence au moins égale à 2 mm.

5. Pneumatique (1) selon l'une quelconque des revendications 1 à 4, dans lequel la largeur Lc du creux (7) est au plus égale à 10% de la hauteur de section nominale H du pneumatique (1).

6. Pneumatique (1) selon l'une quelconque des revendications 1 à 4, dans lequel la largeur Lc du creux (7) est au plus égale à 20 mm, de préférence au plus égale à 12 mm.

7. Pneumatique (1) selon l'une quelconque des revendications 1 à 6, dans lequel le creux (7) est formé dans une couche axialement extérieure de flanc (30) constituée d'un matériau caoutchoutique unique.

8. Pneumatique (1) selon l'une quelconque des revendications 1 à 7, dans lequel la droite (T), contenue dans tout plan méridien (YZ) et passant par deux points d'intersection (721, 722) respectivement de chaque paroi de creux (72) avec la face axialement extérieure de flanc (31), forme, avec la direction radiale (ZZ'), un angle (A) au plus égal à 25°, de préférence au plus égal à 15°.

9. Pneumatique (1) selon l'une quelconque des revendications 1 à 8, dans lequel la protubérance (8) a, dans tout plan méridien (YZ), une hauteur Hp au moins égale à la profondeur Pc du creux (7) moins 2 mm.

10. Pneumatique (1) selon l'une quelconque des revendications 1 à 9, dans lequel la protubérance (8) a, dans tout plan méridien (YZ), une hauteur Hp au plus égale à la profondeur Pc du creux (7) plus 2 mm.

11. Pneumatique (1) selon l'une quelconque des revendications 1 à 10, dans lequel la protubérance (8) est constituée, dans tout plan méridien (YZ), par un étagement d'une première portion étroite (81) s'étendant axialement vers l'extérieur à partir du fond de creux (71) et ayant une largeur minimale égale à la largeur minimale de protubérance Lpmin, et d'une deuxième portion large (82) s'étendant axialement vers l'extérieur à partir de la première portion étroite (81) et ayant une largeur maximale égale à une largeur maximale de protubérance Lpmax.

12. Pneumatique (1) selon l'une quelconque des revendications 1 à 11, le flanc (3) comprenant, sur sa face axialement extérieure de flanc (31) et au voisinage radialement extérieur d'un bourrelet (5), un cordon de protection (32) ayant une arête (321), et le moyen d'ancrage (6) ayant une ligne moyenne circonférentielle (61), dans lequel la ligne moyenne circonférentielle (61) du moyen d'ancrage (6) est positionnée, dans tout plan méridien (YZ), à une distance radiale d1 au moins égale à 4 mm, radialement à l'extérieur de l'arête (321) du cordon de protection (32).

13. Pneumatique (1) selon la revendication 12, dans lequel la ligne moyenne circonférentielle (61) du moyen d'ancrage (6) est positionnée, dans tout plan méridien (YZ), à une distance radiale d2 au moins égale à 10% de la hauteur de la section nominale H du pneumatique (1), radialement à l'intérieur d'une droite axiale (D) passant à mi-hauteur H/2 de la section nominale du pneumatique (1).

14. Insert de flanc (9) destiné à coopérer avec un moyen d'ancrage (6) d'un pneumatique (1) selon l'une quelconque des revendications 1 à 13, par engagement dans le creux (7) du moyen d'ancrage (6) et par clipsage sur la protubérance (8) du moyen d'ancrage (6).

15. Insert de flanc (9) selon la revendication 14, comprenant au moins un matériau polymérique.

16. Ensemble (10) constitué d'un pneumatique (1) selon l'une quelconque des revendications 1 à 13 et d'au moins un insert de flanc (9) selon l'une des revendications 14 ou 15.

17. Ensemble (10) selon la revendication 16, dans lequel l'insert de flanc (9) a une ligne moyenne circonférentielle ayant un diamètre moyen D2, avant montage sur le pneumatique (1), au plus égal à un diamètre moyen D1 d'une ligne moyenne circonférentielle du moyen d'ancrage (6).

18. Ensemble (10) selon l'une des revendications 16 ou 17, dans lequel l'insert de flanc (9) est constitué d'un matériau ayant un module d'élasticité en extension à 10% d'allongement M2, dans lequel le moyen d'ancrage (6) est constitué d'un matériau caoutchoutique ayant un module d'élasticité en extension à 10% d'allongement M1, et dans lequel M2 est au moins égal à 0.4*M1.

19. Ensemble (10) selon l'une quelconque des revendications 16 à 18, dans lequel l'insert de flanc (9) est constitué d'un matériau ayant un module d'élasticité en extension à 10% d'allongement M2, dans lequel le moyen d'ancrage (6) est constitué d'un matériau caoutchoutique ayant un module d'élasticité en extension à 10% d'allongement M1, et dans lequel M2 est au plus égal à 5*M1.

20. Ensemble selon l'une quelconque des revendications 16 à 19, dans lequel l'insert de flanc (9) a une coloration et/ou une texture différentes de celles du flanc (3) comprenant le moyen d'ancrage (6).

## Patentansprüche

1. Reifen (1) für ein leichtes Fahrzeug, der dazu bestimmt ist, auf einer Felge (2) montiert zu werden, und geeignet ist, mit mindestens einem Seitenwandeinsatz (9) ausgestattet zu werden, wobei der Reifen (1) einen Nennquerschnitt mit der Höhe H hat und Folgendes umfasst:
- zwei Seitenwände (3), die einen Gürtel (4) mit zwei Wülsten (5) verbinden, von denen jede dazu bestimmt ist, in Kontakt mit der Felge (2) zu gelangen,
- wobei mindestens eine Seitenwand (3) ein Verankerungsmittel (6) umfasst, das dazu bestimmt ist, mit mindestens einem Seitenwandeinsatz (9) zusammenzuwirken,
- wobei sich das Verankerungsmittel (6) umfänglich, entlang einer Umfangsrichtung (XX') des Reifens, erstreckt und eine Vertiefung (7) umfasst, die in einer axial äußeren Seitenwandlage (30) gebildet ist, die mindestens ein Kautschukmaterial umfasst und sich von einer axial äußeren Seite (31) der Seitenwand aus axial nach innerhalb der Seitenwand (3) erstreckt,
- wobei die Vertiefung (7) axial nach innen hin durch einen Vertiefungsboden (71) und radial durch zwei Vertiefungswände (72) begrenzt wird,
- wobei die Vertiefung (7) in der gesamten die Rotationsachse (YY') des Reifens enthaltenden Meridianebene (YZ) eine Tiefe Pc, einen rechtwinklig zwischen der axial äußeren Seite (31) der Seitenwand und dem Vertiefungsboden (71) gemessenen maximalen Abstand, von mindestens 2 mm und eine an der axial äußeren Seite (31) der Seitenwand zwischen den beiden Vertiefungswänden (72) gemessene Breite Lc von höchstens 15 % der Nennquerschnittshöhe H des Reifens (1) aufweist, wobei das Verankerungsmittel (6) einen Vorsprung (8) umfasst, der in Bezug auf den Vertiefungsboden (71) erhaben ist und sich von dem Vertiefungsboden (71) aus bis in die Nähe der axial äußeren Seite (31) der Seitenwand erstreckt, und wobei der Vorsprung (8) in der gesamten Meridianebene (YZ) eine minimale Breite Lpmin in der Nähe des Vertiefungsbodens (71) aufweist, um die Verankerung des Seitenwandeinsatzes (9), der dazu bestimmt ist, mit dem Verankerungsmittel (6) zusammenzuwirken, zu gewährleisten.

2. Reifen (1) nach Anspruch 1, wobei die Tiefe Pc der Vertiefung (7) mindestens 3 mm beträgt.

3. Reifen (1) nach einem der Ansprüche 1 oder 2, wobei die Tiefe Pc der Vertiefung (7) höchstens 7 mm und bevorzugt höchstens 5 mm beträgt.

4. Reifen (1) nach einem der Ansprüche 1 bis 3, wobei die axial äußere Seitenwandlage (30) eine Dicke W an dem Verankerungsmittel (6) aufweist, wobei die Differenz zwischen der Dicke W der axial äußeren Seitenwandlage (30) und der Tiefe Pc der Vertiefung (7) mindestens 1 mm, bevorzugt mindestens 2 mm beträgt.

5. Reifen (1) nach einem der Ansprüche 1 bis 4, wobei die Breite Lc der Vertiefung (7) höchstens 10 % der Nennquerschnittshöhe H des Reifens (1) beträgt.

6. Reifen (1) nach einem der Ansprüche 1 bis 4, wobei die Breite Lc der Vertiefung (7) höchstens 20 mm, bevorzugt höchstens 12 mm beträgt.

7. Reifen (1) nach einem der Ansprüche 1 bis 6, wobei die Vertiefung (7) in einer axial äußeren Seitenwandlage (30) gebildet ist, die aus einem einzigen Kautschukmaterial besteht.

8. Reifen (1) nach einem der Ansprüche 1 bis 7, wobei die Gerade (T), die in der gesamten Meridianebene (YZ) enthalten ist und durch zwei Schnittpunkte (721, 722) jeder Vertiefungswand (72) mit der axial äußeren Seitenwandseite (31) verläuft, mit der radialen Richtung (ZZ') einen Winkel (A) von höchstens 25°, bevorzugt höchstens 15° bildet.

9. Reifen (1) nach einem der Ansprüche 1 bis 8, wobei der Vorsprung (8) in der gesamten Meridianebene (YZ) eine Höhe Hp aufweist, die mindestens gleich der Tiefe Pc der Vertiefung (7) abzüglich von 2 mm ist.

10. Reifen (1) nach einem der Ansprüche 1 bis 9, wobei der Vorsprung (8) in der gesamten Meridianebene (YZ) eine Höhe Hp aufweist, die höchstens gleich der Tiefe Pc der Vertiefung (7) zuzüglich von 2 mm ist.

11. Reifen (1) nach einem der Ansprüche 1 bis 10, wobei der Vorsprung (8) in der gesamten Meridianebene (YZ) aus einer Abstufung aus einem ersten schmalen Abschnitt (81), der sich von dem Vertiefungsboden (71) aus axial nach außen erstreckt und eine minimale Breite gleich der minimalen Vorsprungsbreite Lpmin aufweist, und aus einem zweiten breiten Abschnitt (82), der sich von dem ersten schmalen Abschnitt (81) aus axial nach außen erstreckt und eine maximale Breite gleich einer maximalen Vorsprungsbreite Lpmax aufweist, besteht.

12. Reifen (1) nach einem der Ansprüche 1 bis 11, wobei die Seitenwand (3) auf ihrer axial äußeren Seitenwandseite (31) und in der radial äußeren Nähe einer Wulst (5) eine Schutzrippe (32) umfasst, die eine Kante (321) aufweist, und wobei das Verankerungsmittel (6) eine umfängliche Mittellinie (61) aufweist, wobei die umfängliche Mittellinie (61) des Verankerungsmittels (6) in der gesamten Meridianebene (YZ) in einem radialen Abstand d1 von mindestens 4 mm radial außerhalb der Kante (321) der Schutzrippe (32) angeordnet ist.

13. Reifen (1) nach Anspruch 12, wobei die umfängliche Mittellinie (61) des Verankerungsmittels (6) in der gesamten Meridianebene (YZ) in einem radialen Abstand d2 von mindestens 10 % der Höhe des Nennquerschnitts H des Reifens (1) radial innerhalb einer axialen Geraden (D), die auf halber Höhe H/2 des Nennquerschnitts des Reifens (1) verläuft, angeordnet ist.

14. Seitenwandeinsatz (9), der dazu bestimmt ist, mit einem Verankerungsmittel (6) eines Reifens (1) nach einem der Ansprüche 1 bis 13 durch Einführen in die Vertiefung (7) des Verankerungsmittels (6) und durch Einrasten auf dem Vorsprung (8) des Verankerungsmittels (6) zusammenzuwirken.

15. Seitenwandeinsatz (9) nach Anspruch 14, der mindestens ein Polymermaterial umfasst.

16. Anordnung (10), die aus einem Reifen (1) nach einem der Ansprüche 1 bis 13 und mindestens einem Seitenwandeinsatz (9) nach einem der Ansprüche 14 oder 15 besteht.

17. Anordnung (10) nach Anspruch 16, wobei der Seitenwandeinsatz (9) eine umfängliche Mittellinie aufweist, die einen mittleren Durchmesser D2, vor der Montage auf dem Reifen (1), aufweist, der höchstens gleich einem mittleren Durchmesser D1 einer umfänglichen Mittellinie des Verankerungsmittels (6) ist.

18. Anordnung (10) nach einem der Ansprüche 16 oder 17, wobei der Seitenwandeinsatz (9) aus einem Material besteht, das einen Dehnelastizitätsmodul bei 10 % Dehnung M2 aufweist, wobei das Verankerungsmittel (6) aus einem Kautschukmaterial besteht, das einen Dehnelastizitätsmodul bei 10 % Dehnung M1 aufweist, und wobei M2 mindestens 0,4*M1 beträgt.

19. Anordnung (10) nach einem der Ansprüche 16 bis 18, wobei der Seitenwandeinsatz (9) aus einem Material besteht, das einen Dehnelastizitätsmodul bei 10 % Dehnung M2 aufweist, wobei das Verankerungsmittel (6) aus einem Kautschukmaterial besteht, das einen Dehnelastizitätsmodul bei 10 % Dehnung M1 aufweist, und wobei M2 höchstens 5*M1 beträgt.

20. Anordnung nach einem der Ansprüche 16 bis 19, wobei der Seitenwandeinsatz (9) eine Färbung und/oder eine Textur aufweist, die verschieden von denen der das Verankerungsmittel (6) umfassenden Seitenwand (3) sind.

## Claims

1. Tyre (1) for a lightweight vehicle, which tyre is intended to be mounted on a rim (2) and is able to be equipped with at least one sidewall insert (9), the said tyre (1) having a nominal section of height H and comprising:
- two sidewalls (3) that connect a crown (4) respectively to two beads (5), each of which is intended to come into contact with the rim (2),
- at least one sidewall (3) comprising an anchoring means (6) intended to interact with at least one sidewall insert (9),
- the anchoring means (6) extending circumferentially, in a circumferential direction (XX') of the tyre, and comprising a recess (7) formed in an axially outer sidewall layer (30) comprising at least one rubber material and extending from an axially outer sidewall face (31) axially towards the inside of the sidewall (3),
- the recess (7) being delimited axially towards the inside by a recess bottom (71) and radially by two recess walls (72),
- the recess (7) having, in any meridian plane (YZ) containing the axis of rotation (YY') of the tyre, a depth Pc, the maximum distance measured perpendicularly between the axially outer sidewall face (31) and the recess bottom (71), which is at least equal to 2 mm, and a width Lc measured, at the axially outer sidewall face (31), between the two recess walls (72) which is at most equal to 15% of the nominal section height H of the tyre (1),
wherein the anchoring means (6) comprises a protuberance (8), which is raised in relation to the recess bottom (71) and extends from the recess bottom (71) to the vicinity of the axially outer sidewall face (31), and wherein the protuberance (8) has, in any meridian plane (YZ), a minimum width Lpmin in the vicinity of the recess bottom (71) so as to ensure the anchoring of the sidewall insert (9) intended to interact with the anchoring means (6).

2. Tyre (1) according to Claim 1, wherein the depth Pc of the recess (7) is at least equal to 3 mm.

3. Tyre (1) according to either of Claims 1 and 2, wherein the depth Pc of the recess (7) is at most equal to 7 mm, and preferably at most equal to 5 mm.

4. Tyre (1) according to any one of Claims 1 to 3, the axially outer sidewall layer (30) having a width W at the anchoring means (6), wherein the difference between the thickness W of the axially outer sidewall layer (30) and the depth Pc of the recess (7) is at least equal to 1 mm, preferably at least equal to 2 mm.

5. Tyre (1) according to any one of Claims 1 to 4, wherein the width Lc of the recess (7) is at most equal to 10% of the nominal section height H of the tyre (1).

6. Tyre (1) according to any one of Claims 1 to 4, wherein the width Lc of the recess (7) is at most equal to 20 mm, preferably at most equal to 12 mm.

7. Tyre (1) according to any one of Claims 1 to 6, wherein the recess (7) is formed in an axially outer sidewall layer (30) made up of a single rubber material.

8. Tyre (1) according to any one of Claims 1 to 7, wherein the straight line (T), which is present in any meridian plane (YZ) and passes through two intersection points (721, 722) respectively of each recess wall (72) with the axially outer sidewall face (31), forms an angle (A) at most equal to 25°, preferably at most equal to 15°, with the radial direction (ZZ').

9. Tyre (1) according to any one of Claims 1 to 8, wherein the protuberance (8) has, in any meridian plane (YZ), a height Hp at least equal to the depth Pc of the recess (7) less 2 mm.

10. Tyre (1) according to any one of Claims 1 to 9, wherein the protuberance (8) has, in any meridian plane (YZ), a height Hp at most equal to the depth Pc of the recess (7) plus 2 mm.

11. Tyre (1) according to any one of Claims 1 to 10, wherein the protuberance (8) is constituted, in any meridian plane (YZ), by a stepped arrangement of a first narrow portion (81), extending axially towards the outside from the recess bottom (71) and having a minimum width equal to the minimum protuberance width Lpmin, and a second wide portion (82), extending axially towards the outside from the first narrow portion (81) and having a maximum width equal to a maximum protuberance width Lpmax.

12. Tyre (1) according to any one of Claims 1 to 11, the sidewall (3) comprising, on its axially outer sidewall face (31) and in the radially outer vicinity of a bead (5), a protective ridge (32) having an edge corner (321), and the anchoring means (6) having a circumferential mean line (61), wherein the circumferential mean line (61) of the anchoring means (6) is positioned, in any meridian plane (YZ), at a radial distance d1 at least equal to 4 mm, radially on the outside of the edge corner (321) of the protective ridge (32).

13. Tyre (1) according to Claim 12, wherein the circumferential mean line (61) of the anchoring means (6) is positioned, in any meridian plane (YZ), at a radial distance d2 at least equal to 10% of the nominal section height H of the tyre (1), radially on the inside of an axial straight line (D) passing through the halfway point H/2 of the nominal section height of the tyre (1).

14. Sidewall insert (9) intended to interact with an anchoring means (6) of a tyre (1) according to any one of Claims 1 to 13, by engaging in the recess (7) of the anchoring means (6) and by clipping over the protuberance (8) of the anchoring means (6).

15. Sidewall insert (9) according to Claim 14, comprising at least one polymeric material.

16. Assembly (10) made up of a tyre (1) according to any one of Claims 1 to 13 and at least one sidewall insert (9) according to one of Claims 14 or 15.

17. Assembly (10) according to Claim 16, wherein the sidewall insert (9) has a circumferential mean line having a mean diameter D2, before the sidewall insert is mounted on the tyre, at most equal to a mean diameter D1 of a circumferential mean line of the anchoring means (6).

18. Assembly (10) according to one of Claims 16 or 17, wherein the sidewall insert (9) is made of a material having a tensile elastic modulus at 10% elongation M2, wherein the anchoring means (6) is made of a rubber material having a tensile elastic modulus at 10% elongation M1, and wherein M2 is at least equal to 0.4*M1.

19. Assembly (10) according to any one of Claims 16 to 18, wherein the sidewall insert (9) is made of a material having a tensile elastic modulus at 10% elongation M2, wherein the anchoring means (6) is made of a rubber material having a tensile elastic modulus at 10% elongation M1, and wherein M2 is at most equal to 5*M1.

20. Assembly (10) according to any one of Claims 16 to 19, wherein the sidewall insert (9) has a colouration and/or a texture that are different from those of the sidewall (3) comprising the anchoring means (6).
